# EUROPEAN PATENT APPLICATION

(11) **EP 3 686 630 A1**
(43) Date of publication of application: **29.07.2020**
(21) Application number: 19153776.0
(22) Date of filing: 25.01.2019
(51) Int. Cl.: G01S 17/02, G01S 7/481, H04M 1/02

(54) **PROXIMITY SENSOR, PARTICULARLY FOR MOBILE DEVICES LIKE SMARTPHONES, TABLETS OR THE LIKE**

(71) Applicant: IDT Inc., San Jose, CA 95138 (US)
(72) Inventor: ALLEN, Dan Gilbert, Springville, UT Utah 84663 (US); GOEPFERT, Lars, 01279 Dresden (DE); GARZAROLLI, Matthias, 01309 Dresden (DE)
(74) Representative: Lippert Stachow Patentanwälte Rechtsanwälte Partnerschaft mbB

(57) **Abstract**

A method for detecting the proximity of a target to a proximity sensor 1, particularly for mobile devices like smartphones, tablets or the like, is disclosed, the method comprising the steps of: sending and receiving a first light signal by a first emitter-detector pair 2 of the proximity sensor 1 with a first light emitter 3 and a first photodetector 4, wherein the first light emitter and the first photodetector are separated by a first distance, sending and receiving a second light signal by a second emitter-detector pair 6 of the proximity sensor 1 with a second light emitter 7 and a second photodetector 8, wherein the second light emitter and the second photodetector are separated by a second distance, and wherein the first distance is different from the second distance, and subtracting the signal of the emitter-detector pair 2 having the smaller distance from the signal of the emitter-detector pair 6 having the greater distance. The invention is based on the fact that the light signal sent and received by the emitter-detector pair 2 having a smaller distance between the light emitter and the photodetector is less susceptible to the distance to the target and more reflects a current crosstalk, wherein the light signal sent and received by the emitter-detector pair 6 having the greater distance is more susceptible to the distance of the target and further including the crosstalk. Thus, subtracting the signal of the emitter-detector pair 2 from the signal of the emitter-detector pair 6 results in a signal that mainly relates to the distance of the target to the proximity sensor 1. In this way even a variable crosstalk, e.g. caused by a thermal drift, a mechanical change or smudge on the cover glass, will be eliminated and the proximity sensor will detect proximity events of a target with a high accuracy.

## Description

The invention relates to a proximity sensor, particularly for mobile devices like smartphones and tablets or the like and to a method for detecting the proximity of a target to a proximity sensor.

Proximity sensors are for example used to turn on and off the display and touch sensor of a mobile device, like a smartphone or tablet, during a phone call. The proximity sensor detects the proximity of user's head to the mobile device. If the proximity sensor detects the proximity of the user's head, the display and/or touch sensor of the mobile device containing the proximity sensor will be switched off, so that no touch signals are generated during the call due to the proximity of the mobile device to the head of the user.

This sensor is usually located in the bezel of cover glass of the mobile device outside of the display region. For aesthetics the inside of the cover glass of the mobile device is masked with an opaque ink in the bezel region. However, a proximity sensor requires an aperture to emit light to the outside of the mobile device and receive reflected light back. The aperture can be hidden from view if the proximity sensor can operate under a partially absorbent or reflective ink. However, reflective ink causes an offset signal called crosstalk, resulting from optical light scattered from the emitter to the detector inside the mobile device.

From the prior art is known to subtract the crosstalk signal from the received signal to enhance the accuracy of the proximity sensor. However, this is only possible if the crosstalk signal is known, like e.g. for a constant crosstalk signal caused by internal reflections that can be measured as a baseline signal when there is no target present. On the other hand, any type of variable crosstalk signal, like e.g. due to thermal drift, mechanical changes or smudge on the cover glass, results in an unknown crosstalk level. Such variable crosstalk signals are challenging to distinguish from proximity events.

It is therefore an object of the present invention to provide a proximity sensor that can detect a proximity signal and a crosstalk signal independently, to allow referencing, zeroing, baselining or subtraction of the crosstalk signal.

The objective is solved by a proximity sensor, particularly for mobile devices like smart phones, tablets or the like, comprising:
a first emitter-detector pair with a first light emitter and a first photodetector, wherein the first light emitter and the first photodetector are separated by a first distance; and
a second emitter-detector pair with second light emitter and a second photodetector, wherein the second light emitter and the second photodetector are separated by a second distance;
wherein the first distance is different from the second distance.

A proximity sensor with a first emitter-detector pair and a second emitter-detector pair having different distances between the respective emitter and photodetector has the advantage that one emitter-detector pair can provide an estimate of the present crosstalk, which can subtracted from the signal of the other emitter-detector pair to provide a signal estimating the proximity of a target to the proximity sensor. Depending on the difference between the first distance and the second distance the signal of the emitter-detector pair providing an estimate for the present crosstalk can be scaled before subtracted from the signal of the other emitter-detector pair to reflect the details of the current assembly. The invention is based on the findings that the signal of the one emitter-detector pair having the smaller distance between the emitter and the photodetector is has much greater crosstalk, and can even have crosstalk that far exceeds the signal from a target. The emitter-detector pair having the greater distance between the emitter and the photodetector has less crosstalk, although it can still be substantial. Thus, the emitter-detector pair having the smaller distance between the emitter and the photodetector can provide an estimate of the present crosstalk, which can be scaled to reflect the current assembly details, like actual difference between the first distance and second distance, the actual air gap between the proximity sensor and the cover glass, the characteristics of the painting on the cover glass and so on. Such a proximity sensor will also detect and subtract variable crosstalk signals caused e.g. by a thermal drift, mechanical changes or smudge on the cover glass, so that the variable crosstalk does not negatively affect the accuracy of the proximity sensor.

In a preferred variant of the invention the difference between the first distance and the second distance is defined by a factor of at least 1,25, preferably by a factor of about 2,0. It has been found out that a distance difference of at least 25 % between the first distance and the second distance is enough for providing an estimate for the present crosstalk. Particularly good results have been achieved for a distance difference of 100 %, i.e. a distance different factor of about 2,0. This is especially applicable when the distances are on the order of a few millimetres, as it typical for compact proximity sensors.

Advantageously the first light emitter and/or the second light emitter is an infrared light emitter. Thus, the first light emitter and/or second light emitter emits light in the spectrum of about 800 nm to about 1mm. Preferably the first light emitter and the second light emitter emit light of approximately the same wavelength.

Accordingly, the first photodetector and/or the second photodetector is an infrared photodetector. Preferably the first photodetector and/or the second photodetector is adapted to match the light emitted from the first light emitter respectively the second light emitter via an optical filter with an infrared passband, for instance.

In a particularly preferred variant of the invention the first emitter-detector pair and the second emitter-detector pair share a common light emitter. Thus, in this variant the proximity sensor comprises one light emitter and two photodetectors, wherein the two photodetectors are arranged at different distances to the common light emitter. In other words, the first light emitter of the first emitter-detector pair is also the second light emitter of the second emitter-detector pair and the different distances are achieved by arranging the first photodetector and the second photodetector at different distances to the light emitter. This reduces the number of components and the required space, which is advantageous for mobile device due to the space and power consumption requirements.

In an alternative preferred variant of the invention the first emitter-detector pair and the second emitter-detector pair share a common photodetector. Thus, in this variant the proximity sensor comprises two light emitters and one photodetector, wherein the two light emitters are arranged at different distances to the common photodetector. In other words, the first photodetector of the first emitter-detector pair is also the second photodetector of the second emitter-detector pair and the different distances are achieved by arranging the first light emitter and the second light emitter at different distances to the photodetector. This also reduces the number of components and the required space, which is advantageous for mobile device due to the space and power consumption requirements.

According to a variant of the invention the first emitter-detector pair and the second emitter-detector pair are arranged on a common substrate. Thus, both emitter-detectors pairs will be affected by approximately the same temperature, mechanical changes and so on. Thus, the common substrate enhances the accuracy of the inventive proximity sensor.

In a variant the proximity sensor further comprises an angle limiter for the first light emitter and/or second light emitter. For example, the angle limiter is a lens, a barrier, an aperture and/or a collimated source. In this way the light emitted from the first light emitter and/or the second light emitter is directed to a desired direction to monitor the proximity of a target in a certain area.

In accordance with a further variant of the invention the proximity sensor further comprises at least one view limiter for the first photodetector and/or the second photodetector. The view limiter is for example a lens, a barrier, an aperture and/or a collimated detector. Thus, the first photodetector and/or second photodetector is only susceptible to light signals from certain directions, thereby monitoring the proximity of a target in a certain area.

Pursuant to another advantageous variant of the invention the first emitter-detector pair and the second emitter-detector pair are arranged collinearly. Thus, the first light emitter, the first photodetector, the second light emitter and the second light emitter are arranged in a straight assembly direction.

In a particularly preferred variant of the invention the proximity sensor further comprises an angular extent detector for detecting the target angular extent. By detecting the target angular extent, the so-called zero distance problem is solved. When target is so close that the emitter and detector fields of view do not overlap well, the target signal begins to decrease with distance and appears to vanish as the target distance goes to zero. This happens when the target begins to block the light path between the emitter-detector pair having the greater distance. Thus, the emitter-detector pair having the smaller distance gets significantly more signal than the emitter-detector pair having the greater distance. Since the signal is decreasing relative to crosstalk, this would incorrectly suggest that an approaching target is actually moving away. However, by detecting an increasing difference between photodetector responses with different fields of view, it can be inferred that a target is approaching, even if the proximity signal is going down. This dependence of the difference between signals from differing fields of view can be used to compensate, or partially compensate the decrease in proximity signal at short distances. The angular extent detector is for example a photodetector, segmented photodetector, pair of photodetectors or photodetector array with at least two different fields of view. One means of generating differing fields of view is related to the distance of a detector from an opening in a lid. When a detector is close to an overhang, its field of view is limited. A lens produces a similar effect.

According to an advantageous variant the first photodetector and/or the second photodetector is also the angular extent detector for detecting the target angular extent. Thus, no additional photodetector is necessary, which saves space and power consumption.

Pursuant to another variant of the invention the proximity sensor further comprises a compensator for compensating the output value of the proximity sensor based on the results of the angular extent detector. The compensator of the proximity sensor can e.g. determine how the signal of a photodetector with two different fields of view changes as the target approaches the photodetector. For a target that is far away from the photodetector the signals for both fields of view are similar, but as the target approaches the photodetector the signals for both fields of view will change differently and the compensator can compensate this different behaviour in the output value of the proximity sensor.

In a further variant the proximity sensor according to the invention further comprises or is connected or operably connectable to an integrated circuit, wherein the integrated circuit comprises one or more of the following units:
- a driver unit for the first light emitter and/or second light emitter,
- an analog-to-digital converter,
- a reducer for producing an output signal or value which increases with the signal of the emitter-detector pair having the greater distance and which decreases with the signal of the emitter-detector pair having the smaller distance
- a comparator comparing the output signal of the reducer with a threshold.

The object is further solved by a method for detecting the proximity of a target to a proximity sensor comprising the steps of:
sending and receiving a first light signal by a first emitter-detector pair of the proximity sensor with a first light emitter and a first photodetector, wherein the first light emitter and the first photodetector are separated by a first distance,
sending and receiving a second light signal by a second emitter-detector pair of the proximity sensor with a second light emitter and a second photodetector, wherein the second light emitter and the second photodetector are separated by a second distance, and wherein the first distance is different from the second distance,
subtracting the signal of the emitter-detector pair having the smaller distance from the signal of the emitter-detector pair having the greater distance.

The invention is based on the fact that the light signal sent and received by the emitter-detect pair having a smaller distance between the light emitter and the photodetector is less susceptible to the distance to the target and more reflects a current crosstalk, wherein the light signal send and received by the emitter-detector pair having the greater distance is more susceptible to the distance of the target and further including the crosstalk. Thus, subtracting the signal of the emitter-detector pair having the smaller distance from the signal of the emitter-detector pair having the greater distance results in a signal that mainly relates to the distance of the target to the proximity sensor. In this way even a variable crosstalk, e.g. caused by a thermal drift, a mechanical change or smudge on the cover glass, will be eliminated and the proximity sensor will detect proximity events of a target with a high accuracy.

In a preferred variant the method comprises the further step of scaling the signal of the emitter-detector pair having the smaller distance before the step of subtracting. The scaling can reflect the details of the current details of the proximity sensor, i.e. the difference between the first distance and the second distance, or details regarding the usage of the proximity sensor, like e.g. the type of cover glass and coating on the cover glass and so on. Thus, the scaling reflects the details of the current assembly. For example. The scaling is a fixed or programmable factor.

According to a preferred variant of the invention the first light signal and the second light signal is sent by the same emitter. In this variant the proximity sensor only comprises one light emitter, which functions as first light emitter and also as second light emitter. This emitter is arranged at different distances to the first photodetector and second photodetector. Thus, the proximity sensor comprises one light emitter and two photodetectors. This reduces the number of components and the required space, which is advantageous for mobile device due to the space and power consumption requirements.

Pursuant to an alternative variant of the invention the first light signal and the second light signal is received by the same photodetector. In this variant the proximity sensor only comprises one photodetector, which functions as first photodetector and also as second photodetector. This photodetector is arranged at different distances to the first light emitter and second light emitter. Thus, the proximity sensor comprises two light emitters and one photodetector. This also reduces the number of components and the required space, which is advantageous for mobile device due to the space and power consumption requirements.

Advantageously the sending and receiving of the first light signal and of the second light signal is performed successively. In this way there is no crosstalk between the first light signal and the second light signal, which increases the accuracy of the inventive method respectively of the proximity sensor. In this respect it is not important which emitter-detector pair first sends the light signals and which secondly sends the light signal.

In a preferred variant of the invention the step of subtracting is performed internally by the proximity sensor, preferably by analog or digital math. In this way no external data processing unit, like a microcontroller, is involved, which would add a time delay to the processing of the light signals.

Preferably the first light signal and/or the second light signal is an infrared light signal with a wavelength in the range of about 800 nm to about 1mm. Advantageously, the first light signal and the second light signal have approximately the same wavelength.

Pursuant to an inventive variant the method comprises the step of directing the first light signal and/or second light signal. The first light signal and/or second light signal the emitted light signals are advantageously directed into a focus area of the proximity sensor. In case of mobile devices, the focus area corresponds to the area adjacent to the display, to detect if the mobile device is e.g. held to the ear of the user.

According to a variant of the invention the method comprises the step of adjusting a viewing angle of the first photodetector and/or second photodetector of the first emitter-detector pair respectively second emitter-detector pair. By adjusting the viewing angle of the photodetector, it is again possible to observe a focus area as explained above with respect to the directing of the first light signal and/or second light signal.

In a particularly preferred variant of the invention the method comprises the further step of detecting the target angular extent. The target angular extent increases when the distance of the target to the proximity sensor decreases and vice versa. For example, the target angular extent is detected by a photodetector with at least two different fields of view. As the target is far away from the proximity sensor, the target is located only in one of the at least two fields of view. As the target gets closer to the proximity sensor the target angular extent increases and at some point the target will be with two fields of view, i.e. an increased target angular extent has been detected. The accuracy increases with the number of fields of view. Preferably the different fields of view do not overlap each other.

If the target angular extent is detected, the method according to the invention can compensate the so-called zero distance effect. This problem describes the situation where a target is very close to the proximity sensor, in which case the emitter-detector pair having the greater distance does produce nearly no signal because the emitted light signal is not reflected by the target to the photodetector due to the short distance between the proximity sensor and the target. In this case the light signal is mainly scattered. By detecting the angular extent of the target, the method according to the invention can compensate this zero distance problem because if the target angular extent is great, a proximity event can be assumed.

Advantageously the method according to the invention is implemented by a proximity sensor according to the invention. In general, the proximity sensor can comprise units for executing the method steps described with respect to the method according to the invention and vice versa, the method according to the invention can comprise methods steps to control the features of the proximity sensor according to the invention. Thus, the features disclosed with respect to the inventive proximity sensor apply accordingly to the inventive method and the features disclosed with respect to the inventive method apply accordingly to the inventive proximity sensor.

In the following, the invention will be further explained with respect to the embodiments shown in the figures. It shows:
- Fig. 1: a schematic top view of a first embodiment of a proximity sensor according to the invention,
- Fig. 2: a schematic side view of a second embodiment of a proximity sensor according to the invention,
- Fig. 3: a schematic side view of a third embodiment of a proximity sensor according to the invention,
- Fig. 4: a schematic side view of a fourth embodiment of a proximity sensor according to the invention,
- Fig. 5: a schematic side view of a fifth embodiment of a proximity sensor according to the invention,
- Fig. 6: a schematic side view of a sixth embodiment of a proximity sensor according to the invention, and
- Fig. 7: use of the proximity sensor of Fig. 3 in a mobile device.

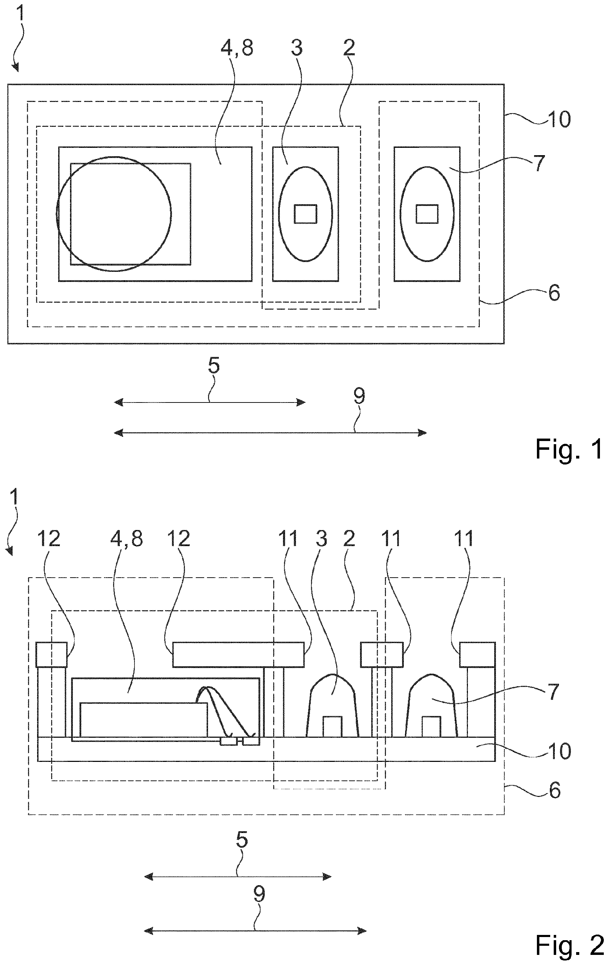

Fig. 1 shows a schematic top view of a first embodiment of a proximity sensor 1, particularly for mobile devices like smartphones, tablets or the like. The proximity sensor comprises a first emitter-detector pair 2, surrounded by a dashed line in Fig. 1. The first emitter-detector pair 2 comprises a first light emitter 3 and a first photodetector 4. The first light emitter 3 and the first photodetector 4 are separated by a first distance 5, indicated in Fig. 1 by a double arrow line.

The proximity sensor 1 further comprises a second emitter-detector pair 6, surrounded by a dotted line in Fig. 1. The second emitter-detector pair 6 comprises a second light emitter 7 and a second photodetector 8. According to the embodiment shown in Fig. 1 the first emitter-detector pair 2 and the second emitter-detector pair 6 share a common photodetector 4, 8, i.e. the first photodetector 4 is built integrally with the second photodetector 8 by the common photodetector 4, 8. The second light emitter 7 and the second photodetector 8 are separated by a second distance 9, indicated in Fig. 1 also by a double arrow line.

According to the invention the first distance 5 is different from the second distance 9. Preferably the difference between the first distance 5 and the second distance 9 is defined by a factor of at least 1,25. Pursuant to the embodiment shown in Fig. 1 the difference between the first distance 5 and the second distance 9 is defined by a factor of about 1,5., i.e. the second distance 9 is about 50 % longer than the first distance 5.

The first light emitter 3 and the second light emitter 7 emit light in the infrared spectrum and the common photodetector 4, 8 is adapted to receive light in the infrared spectrum.

The first emitter-detector pair 2 and the second emitter-detector pair 6 are arranged on a common substrate 10. Preferably the first emitter-detector pair 2 and the second emitter-detector pair 6 are arranged colinearly on the common substrate 10.

The proximity sensor 1 is used to detect the proximity of a target 20 to the proximity sensor 1. If the proximity sensor 1 detects the proximity of the target 20, the display and/or touch sensor of the mobile device containing the proximity sensor 1 can be switched off. This is particularly useful in case a user holds the mobile device to his head during a phone call, so that for example no touch signals are generated during the call due to the proximity of the mobile device to the head of the user.

Fig. 2 shows a schematic side view of a second embodiment of a proximity sensor 1 according to the invention. The proximity sensor 1 of Fig. 2 comprises a first emitter-detector pair 2 with a first light emitter 3 and a first photodetector 4 and a second emitter-detector pair 6 with a second light emitter 7 and a second photodetector 8. Like in the embodiment of Fig. 1 the first photodetector 4 and the second photodetector 8 are built integrally by a common photodetector 4, 8.

The first light emitter 3 is arranged at a first distance 5 from the common photodetector 4, 8 and the second light emitter 7 is arranged at a second distance 9 from the common photodetector 4, 8 as indicated by the two double arrow lines in Fig. 2. The difference between the first distance 5 and the second distance is about 1,5, like in the first embodiment of Fig. 1.

The first and second light emitter 3, 7 and the common photodetector 4, 8 preferably operate in the infrared light spectrum.

The first emitter-detector pair 2 and the second emitter-detector pair 6 are arranged colinearly on a common substrate 10, as shown in Fig. 2.

The proximity sensor 1 of the second embodiment shown in Fig. 2 further comprises an angle limiter 11 for the first light emitter 3 and an angle limiter 11 for the second light emitter 3. The angle limiter 11 limits the direction of the light emitted by the first light emitter 3 respectively of the light emitted from the second light emitter 7. The light emitters 11 of Fig. 2 comprise a barrier between both light emitters 3, 7 and further define an aperture for each light emitter 3, 7, wherein the aperture is located above the respective light emitter 3, 7. Alternatively or additionally the angle limiter 11 could comprise a lens or a collimated source, i.e. collimated light emitter 3, 7.

The proximity sensor 1 of the second embodiment shown in Fig. 2 further comprises a view limiter 12 for the common photodetector 4, 8. The view limiter 12 limits the direction from which the photodetector 4, 8 can receive light signals 21. The view limiter 12 shown in Fig. 2 comprises a barrier around the common photodetector 4, 8 and defining an aperture above the common photodetector 4,8. Alternatively or additionally the view limiter 12 could comprise a lens or a collimated detector, i.e. collimated photodetector 4, 8.

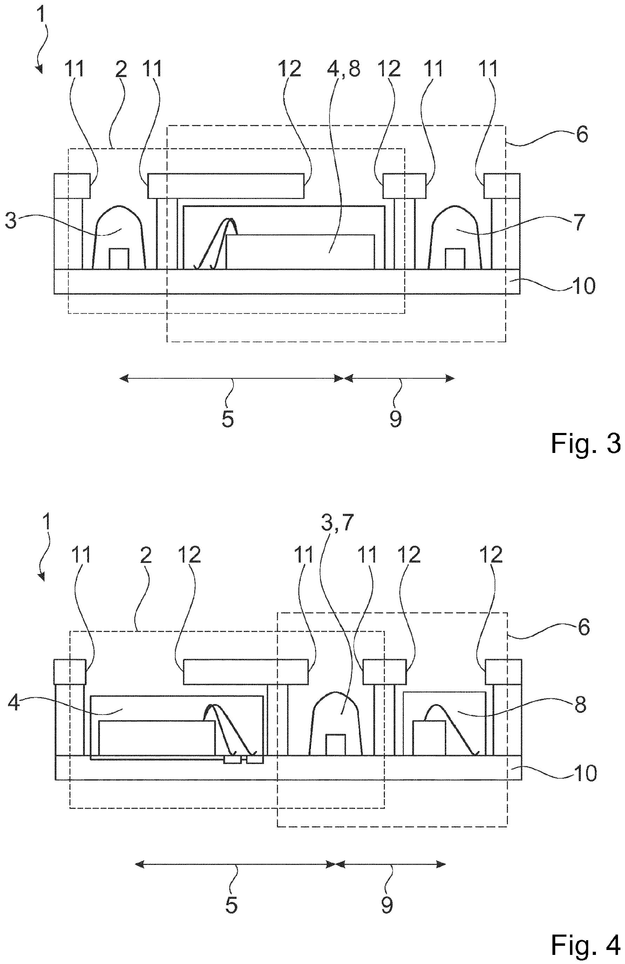

Fig. 3 shows a third embodiment of a proximity sensor 1 in a schematic side view. The proximity sensor 1 of Fig. 3 comprises a first emitter-detector pair 2 with a first light emitter 3 and a first photodetector 4. The first light emitter is separated from the first photodetector 4 by a first distance 5. The proximity sensor 1 further comprises a second emitter-detector pair 6 with a second light emitter 7 and a second photodetector 8, wherein the first photodetector 4 and the second photodetector 8 are built integrally by a common photodetector 4, 8. The second light emitter 7 is separated from the second photodetector 8 by a second distance 9. The difference between the second distance 9 and the first distance 5 is defined by a factor of about 2,0.

As described with respect to the second embodiment of Fig. 2 the third embodiment of Fig. 3 also comprises angle limiter 11 for the first light emitter 3 and the second light emitter 7 and a view limiter 12 for the photodetector 4, 8.

The third embodiment of Fig. 3 differs from the second embodiment of Fig. 2 in that the first light emitter 3 and the second light emitter 7 are arranged on different sides of the common photodetector 4, 8, whereas in the second embodiment of Fig. 2 the first light emitter 3 and the second light emitter 7 are arranged on the same side of the common photodetector 4, 8. In both embodiment the first emitter-detector pair 2 and the second emitter-detector pair 6 are arrange colinearly on a common substrate 10.

In Fig. 4 a fourth embodiment of a proximity sensor 1 according to the invention is shown in a schematic side view. The proximity sensor 1 comprises a first emitter-detector pair 2 comprising a first light emitter 3 and a first photodetector 4, separated by a first distance 5 and a second emitter-detector pair 6 comprising a second light emitter 7 and a second photodetector 8, separated by a second distance 9. In this embodiment the first light emitter 3 is built integrally with the second light emitter 7 by a common light emitter 3, 7. The first photodetector 4 and the second photodetector 8 are arranged on opposite sides of the common light emitter 3, 7. However, it also possible that the first photodetector 4 and the second photodetector 8 are arranged on the same side of the common light emitter 3, 7.

The first emitter-detector pair 2 and the second emitter-detector pair 6 are arranged colinearly on a common substrate 10 and the difference between the second distance 9 and the first distance 5 is about 2,0.

According to the fourth embodiment of Fig. 4 the proximity sensor 1 comprises a view limiter 12 for the first photodetector 4 and the second photodetector 8 and an angle limiter for the common light emitter 3, 7.

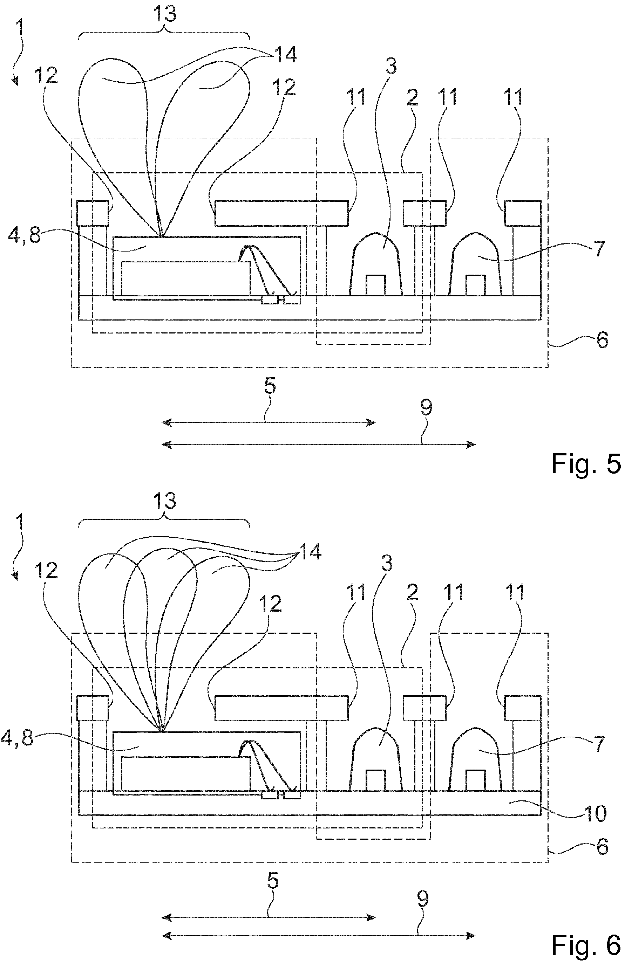

Fig. 5 shows a schematic side view of a fifth embodiment of a proximity sensor 1 according to the invention. The proximity sensor of Fig. 5 corresponds to the proximity sensor 1 of Fig. 2 and further comprises an angular extent detector 13 for detecting the target angular extent of a target 20 in the proximity of the proximity sensor 1. The angular extent detector 13 is integrated into the common photodetector 4, 8 and has two different field of views 14. As the target 20 get closer to the proximity sensor 1 the target angular extent increases. At the beginning the target is only within one field of view 14 but as the target 20 gets closer to the proximity sensor 1 the target angular extent increases and at one point the target 20 is within both fields of view 20. The angular extent detector 13 solves the problem of the so-called zero distance problem. The zero distance problem relates to the fact that the emitter-detector pair 2 ,6 having the greater distance 5, 9 does not create a signal in case the target is very close to the proximity sensor 1. If the angular extent detector 13 detects a very close target 20 a proximity event can be created irrespective of the signal of the emitter-detector pair 2, 6 having the greater distance 5, 9. The proximity sensor 1 can comprise a compensator (not shown) which monitors the signals of angular extent detector 13 and compensates the zero distance effect by generating a proximity signal as explained above.

The sixth embodiment of the invention shown in Fig. 6 differs from the embodiment of Fig. 5 int hat the angular extent detector 13 comprises three different fields of view 14. According to the fifth embodiment of Fig. 5 the different fields of view 14 do not overlap, whereas according to the sixth embodiment of Fig. 6 the different fields of view 14 partially overlap.

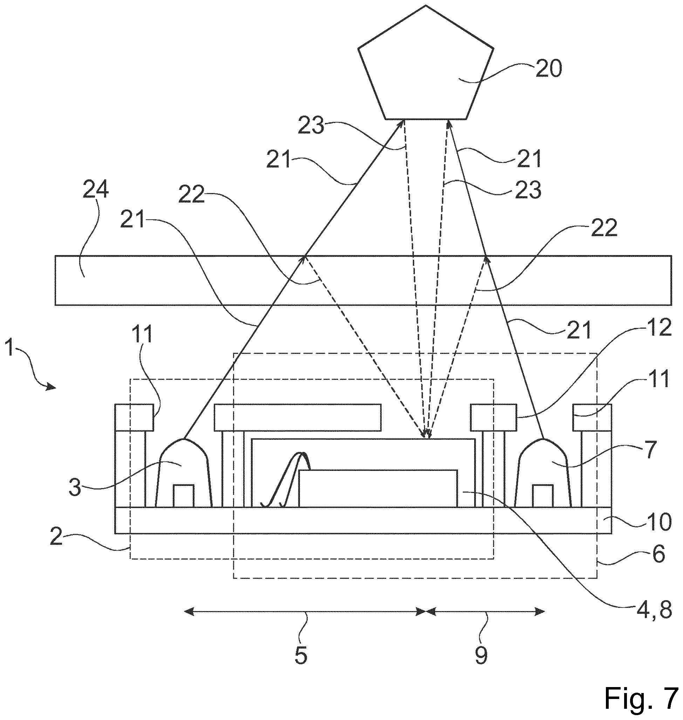

Fig. 7 shows the use of the proximity sensor 1 in a mobile device. The proximity sensor 1 is mounted below a cover glass 24 of the mobile device. In Fig. 7 only the proximity sensor 1 and the cover glass 24 are shown. The details of the proximity sensor 1 have been explained above with respect to Fig. 3.

First, a light signal 21 is emitted by the light emitter 3 of the first emitter-detector pair 2 towards the cover glass 24 of the mobile device. A part of this emitted light signal 21 is scattered and/or reflected by the cover glass 24 towards the common photodetector 4, 8. This reflected light signal 22 is shown in Fig. 7 by a dotted line and represents the crosstalk. The crosstalk depends on the characteristics of the cover glass24, coating on the cover glass 24, the distance of the cover glass 24 to the proximity sensor 1, smudge on the cover glass 24, a possible bending of the cover glass 24 or substrate 10 of the proximity sensor 1 and so on. Thus, the crosstalk comprises static and dynamic parts.

A part of the emitted light signal 21 strikes the target 20 is and reflected back to the common photodetector 4, 8. This part of the light signal 23 is shown in Fig. 7 by a dashed line. The overall received light signal at the photodetector 4, 8 consists of the crosstalk light signal 22 and the target light signal 23.

To subtract the crosstalk from the received light signal a second light signal 21 is emitted from the second light emitter 7 of the second emitter-detector pair 6. Again, a part of this emitted light signal 21 is reflected and/or scattered by the cover glass 24 towards the photodetector 4, 8 as crosstalk (shown by dotted line 22 in Fig. 7). A part of the emitted light signal 21 strikes the target 20 and is reflected back towards the photodetector 4, 8, as shown by the dashed line 23 in Fig. 7.

It has been found out, that the received signal of the emitter-detector pair 6 having the smaller distance 9 between the light emitter 7 and the photodetector 4, 8 mainly consist of crosstalk signal 22. Thus, by subtracting the signal of this emitter-detector pair 6 from the signal of the other emitter-detector pair 2 the current crosstalk is eliminated.

To reflect the actual conditions of the proximity sensor 1 in the mobile device and the current dimension the signal of the emitter-detector pair 6 having the smaller distance 9 can be scaled before being subtracted from the signal of the emitter-detector pair 2 having the greater distance 5.

According to the embodiment of Fig. 7 the light signals of the first emitter-detector pair 2 and of the second emitter-detector pair 6 are received by a common photodetector 4, 8. Alternatively, two photodetectors 4, 8 and a common light emitter 3, 7 can be used or even two photodetectors 4, 8 and two light emitters 3, 7.

The sending of the light signal 21 by the first emitter-detector pair 2 and of the second emitter-detector pair 6 takes place successively, to avoid any crosstalk between the light signals 21 of the emitter-detector-pairs 2, 6.

Advantageously the subtracting is performed internally by the proximity sensor 1, for example by analog or digital math. This increases the efficiency of the proximity sensor 1 because no external microcontroller is involved, which at least adds some power consumption and cost.

The light signal 21 is preferably an infrared light signal 12 having a wavelength between about 800 nm to about 1mm.

The light signals 21 emitted by the first emitter-detector pair 2 and of the second emitter-detector pair 6 is directed by an angle limiter 11 of the proximity sensor 1, to define an area that is monitored by the proximity sensor 1. Further, the crosstalk light signals 22 and target light signals 23 are directed by the view limiter 12 of the proximity sensor 1.

### List of references

- 1: proximity sensor
- 2: first emitter-detector pair
- 3: first light emitter
- 4: first photodetector
- 5: first distance
- 6: second emitter-detector pair
- 7: second light emitter
- 8: second photodetector
- 9: second distance
- 10: substrate
- 11: angle limiter
- 12: view limiter
- 13: angular extent detector
- 14: field of view
- 20: target
- 21: light signal
- 22: crosstalk
- 23: target signal
- 24: cover glass

## Claims

1. Proximity sensor (1), particularly for mobile devices like smartphones, tablets or the like, comprising:
a first emitter-detector pair (2) with a first light emitter (3) and a first photodetector (4), wherein the first light emitter (3) and the first photodetector (4) are separated by a first distance (5), and
a second emitter-detector pair (6) with a second light emitter (7) and a second photodetector (8), wherein the second light emitter (7) and the second photodetector (8) are separated by a second distance (9),
wherein the first distance (5) is different from the second distance (9).

2. Proximity sensor (1) according to claim 1, wherein the difference between the first distance (5) and the second distance (9) is defined by a factor of at least 1,25.

3. Proximity sensor (1) according to claim 1 or claim 2, wherein the first emitter-detector pair (2) and the second emitter-detector pair (6) share a common light emitter (3, 7) or a common photodetector (4, 8).

4. Proximity sensor (1) according to any of claims 1 to 3, wherein the first emitter-detector pair (2) and the second emitter-detector pair (6) are arranged on a common substrate (10).

5. Proximity sensor (1) according to any of claims 1 to 4, further comprising at least one angle limiter (11) for the first light emitter (3) and/or second light emitter (7).

6. Proximity sensor (1) according to any of claims 1 to 5, further comprising at least one view limiter (12) for the first photodetector (4) and/or second photodetector (8).

7. Proximity sensor (1) according to any of claims 1 to 6, wherein the first emitter-detector pair (2) and the second emitter-detector pair (6) are arranged collinearly.

8. Proximity sensor (1) according to any of claims 1 to 7, further comprising an angular extent detector (13) for detecting the target angular extent, wherein the angular extent detector (13) is preferably a photodetector (4, 8) with at least two different fields of view (14).

9. Proximity sensor (1) according to any of claims 1 to 8, wherein the proximity sensor (1) comprises or is connected to or operably connectable to an integrated circuit, wherein the integrated circuit comprises one or more of the followings units:
a driver unit for the first light emitter (3) and/or second light emitter (7),
an analog-to-digital converter,
a reducer for producing an output signal or value which increases with the signal of the emitter-detector pair (2, 6) having the greater distance (5, 9) and which decreases with the signal of the emitter-detector pair (6, 2) having the smaller distance (9, 5),
a comparator comparing the output of the reducer with a threshold.

10. Method for detecting the proximity of a target (20) to a proximity sensor (1) comprising the steps of:
sending and receiving a first light signal (21) by a first emitter-detector pair (2) of the proximity sensor (1) with a first light emitter (3) and a first photodetector (4), wherein the first light emitter (3) and the first photodetector (4) are separated by a first distance (5),
sending and receiving a second light signal (21) by a second emitter-detector pair (6) of the proximity sensor (1) with a second light emitter (7) and a second photodetector (8), wherein the second light emitter (7) and the second photodetector (8) are separated by a second distance (9), and wherein the first distance (5) is different from the second distance (9),
subtracting the signal of the emitter-detector pair (2, 6) having the smaller distance (5, 9) from the signal of the emitter-detector pair (6, 2) having the greater distance (9, 5).

11. Method according to claim 10, further comprising the step of scaling the signal of the emitter-detector pair (2, 6) having the smaller distance (5, 9) before the step of subtracting.

12. Method according to claim 10 or claim 11, wherein the first light signal (21) and the second light signal (21) is send by the same light emitter (3, 7) or received by the same photodetector (4, 8).

13. Method according to any of clams 10 to 12, comprising the step of directing the first light signal (21) and/or second light signal (21) and/or the step of adjusting the viewing angle of the first photodetector (4) and/or second photodetector (8).

14. Method according to any of claims 10 to 13, comprising the step of detecting the target angular extent, preferably by a photodetector (4, 8) with at least two different fields of view (14).

15. Method for detecting the proximity of a target (20) to a proximity sensor (1) using the proximity sensor (1) according to any of claims 1 to 9.
